# DEMANDE DE BREVET EUROPEEN

(11) **EP 2 709 295 A1**
(43) Date de publication de la demande: **19.03.2014**
(21) Numéro de dépôt: 12306107.9
(22) Date de dépôt: 14.09.2012
(51) Int. Cl.: H04B 10/61, G01J 11/00

(54) **Visualisation d'un signal optique par échantillonnage optique linéaire**

(71) Demandeur: Alcatel Lucent, 75007 Paris (FR)
(72) Inventeur: Provost, Jean-Guy, 91460 MARCOUSSIS (FR); Shen, Alexandre, 91767 PALAISEAU (FR)
(74) Mandataire: Sciaux, Edmond

(57) **Abrégé**

Un système de visualisation par échantillonnage optique linéaire d'un signal optique OS comporte au moins un premier sous-système relatif au traitement d'un signal pulsé SP et au moins un deuxième sous-système relatif au traitement d'un signal optique OS. Les signaux sont décomposés selon deux composantes de polarisation orthogonales, dites verticale et horizontale. Le signal pulsé SP est décomposé en composantes verticale Vsp et horizontale Hsp, et les modes de propagation transverse magnétique TM et électrique TE du signal optique OS donnent respectivement les composantes verticales Vtm et Vte et les composantes horizontales Htm et Hte. Les composantes verticales et horizontales sont décalées en temps. Les composantes verticales d'une part et horizontales d'autre part du signal pulsé SP et du signal optique OS sont parallèles. La détection successive et synchronisée des composantes verticales et des composantes horizontales permet d'échantillonner le signal OS, qui est visualisé par un traitement électronique.

## Description

### DOMAINE TECHNIQUE

La présente invention se rapporte au domaine des télécommunications par réseaux optiques, et plus précisément à la problématique de la visualisation directe et du contrôle des signaux optiques à très haut débits, typiquement jusqu'à quelques centaines de Gigabit/seconde, par un échantillonnage optique linéaire.

### ARRIERE-PLAN

Les procédés de numérisation par échantillonnage optique linéaire sont issus d'une application particulière de la détection hétérodyne. La détection hétérodyne utilise généralement un signal optique issu d'un oscillateur local, lequel est mélangé à travers un coupleur optique au signal optique à analyser. Le signal optique mélangé est alors détecté sur un photodétecteur, dont le signal électrique est un signal de battement entre le signal optique à analyser et le signal issu de l'oscillateur local. Lorsque des photodétecteurs équilibrés sont utilisés, ils délivrent un signal électrique hétérodyne provenant du mélange du signal optique et du signal issu de l'oscillateur, suivant un premier bras issu du coupleur d'une part et provenant d'autre part d'une copie du signal mélangé mais déphasée d'une quadrature (π/2). La comparaison de ces deux signaux électriques permet de déduire l'amplitude et la phase du signal codé à analyser. Il est indispensable que les deux photodétecteurs soient équilibrés, ou appariés, afin que la comparaison des deux signaux électriques donne sans erreur systématique l'amplitude et la phase du signal optique analysé.

Cependant, le schéma simple de détection hétérodyne ne permet pas d'extraire facilement la phase du signal optique codé à analyser : cette extraction nécessite en effet la connaissance précise de l'amplitude du signal optique et/ou de l'oscillateur local. Dans la pratique, il est souvent utile de doubler le schéma de détection hétérodyne de base, et d'introduire une lame quart-d'onde (déphasage de π/2) soit sur le chemin optique du signal, soit sur celui de l'oscillateur local. On obtient alors le schéma basique de la détection dite cohérente, où deux paires de photodétecteurs équilibrés sont utilisées. La soustraction des deux premiers photo-signaux donne un signal électrique dénommé I, et celle de la seconde paire de photodétecteurs équilibrés donne un signal électrique dénommé Q. Les signaux électriques I et Q tels que I = |C| cos (ϕ) et Q = |C| sin (ϕ) peuvent être utilisés pour reconstituer un nombre complexe C tel que C = |C| (cos ϕ + j sin ϕ) représentatif du signal optique à analyser.

Lorsque des impulsions optiques ultracourtes sont utilisées comme oscillateur local, la technique de base peut être appelée « échantillonnage optique linéaire hétérodyne ». En effet, la détection hétérodyne ne peut avoir lieu seulement lorsqu'il y a la présence simultanée du signal optique et de l'impulsion (oscillateur local) sur le photodétecteur. Ainsi dans le schéma de base d'un échantillonnage optique linéaire, les composants suivants sont indispensables, mais pas suffisants dans le cas réel : source d'impulsions optiques courtes (oscillateur local), système optique permettant de mélanger le signal optique à analyser et le signal issu de l'oscillateur local comprenant des guides d'onde optiques, tels que des fibres optiques, et une ligne à retard permettant d'introduire un déphasage de π/2 entre le premier système de détection hétérodyne et le second, et enfin deux paires de photodétecteurs équilibrés.

Par rapport aux procédés non-linéaires, les procédés linéaires autorisent le traitement des signaux optiques ayant une faible puissance à l'entrée et préservent l'information relative à la phase grâce à une double détection. Cependant les procédés de numérisation par échantillonnage optique linéaire nécessitent un temps de cohérence trop long concernant les signaux lumineux intervenant dans l'échantillonnage (de l'ordre de 50 µs), ce qui est incompatible avec les signaux optiques réels, et par conséquent ce procédé peut entrainer une perte de l'information.

Un moyen de minimiser cet inconvénient est de recourir à un double échantillonnage. Mais il est alors nécessaire de doubler l'équipement utilisé donc le coût. Typiquement, l'impulsion d'échantillonnage est dédoublée et décalée d'un temps-bit du signal optique à analyser. On prélève au même moment un échantillon dans un bit d'information et un autre dans le bit suivant, de sorte que les échantillons prélevés gardent leur cohérence temporelle : en effet, même si le temps de cohérence des signaux mis en jeu est relativement faible (≤ 1 µs), il reste tout de même largement supérieur à la période des signaux analysés. Pour rappel, un signal codé à 10 Gb/s a une période de 100 ps. Ainsi le problème du temps de cohérence des signaux peut être résolu de cette manière, même si c'est au prix d'une duplication du schéma de détection cohérente. A ce stade, le schéma d'échantillonnage linéaire est une combinaison de quatre schémas de détection hétérodyne de base, et donc requiert la présence de huit photodétecteurs équilibrés.

Le signal issu de l'oscillateur local, a priori connu, doit avoir une polarisation optique alignée avec celle du signal optique à analyser lors de leur arrivée sur le photodétecteur afin que la détection hétérodyne puisse avoir lieu. L'une des solutions permettant de résoudre le problème de la polarisation inconnue du signal optique à analyser consiste à projeter ce signal optique sur deux états de polarisation orthogonaux bien connus, choisis de façon arbitraire ou conventionnelle, et à maintenir ces deux états connus par l'utilisation de fibres optiques à maintien de polarisation dans un système à fibre optique. Ces deux états de polarisation doivent être traités et détectés de façon identique avant que les signaux issus de la détection hétérodyne soient recomposés, afin de restituer le signal optique initial avant sa projection sur les deux états orthogonaux. Ainsi, cette solution nécessite la duplication de tout le schéma de détection cohérente impulsionnelle (double détection hétérodyne). Additionnée à la solution proposée pour résoudre le problème de faible cohérence temporelle des signaux optiques réels, un système complet de détection hétérodyne nécessite donc de multiplier par huit le schéma de détection hétérodyne de base, conduisant à utiliser seize photodétecteurs équilibrés.

### RESUME

L'invention a pour but d'éliminer ces inconvénients de l'art antérieur grâce à un système de visualisation d'un signal optique par échantillonnage optique linéaire plus simple et moins coûteux que les systèmes connus.

L'invention a aussi pour but de proposer un système de visualisation par échantillonnage optique linéaire ultra-rapide permettant de caractériser les signaux optiques à modulation d'amplitude et/ou de phase à un taux de transmission jusqu'à des débits très élevés et sans aucune limitation dans la longueur des séquences, le débit n'étant limité que par la durée de l'impulsion d'échantillonnage utilisée.

L'invention a encore pour but de proposer un procédé de visualisation par échantillonnage optique linéaire d'un signal optique complexe (i.e. modulé sur l'amplitude et/ou la phase) à très haut débit, avec un format de codage avancé, notamment le format utilisant le codage en phase, qui préserve l'information relative au signal optique à analyser pour un coût moindre.

L'invention propose aussi un procédé permettant d'obtenir le signal hétérodyne à partir du cas réel où le signal optique à analyser a un mode de propagation optique inconnue et une faible cohérence temporelle.

L'objet de la présente invention est un système de visualisation par échantillonnage optique linéaire d'un signal optique OS comportant au moins un premier sous-système relatif au traitement d'un signal pulsé SP d'échantillonnage et au moins un deuxième sous-système relatif au traitement d'un signal optique OS à échantillonner, le premier et le deuxième sous-systèmes coopérant avec un dispositif pour l'échantillonnage et la détection du signal optique, dans lequel
- le signal pulsé SP et le signal optique OS entrent dans le dispositif pour l'échantillonnage et la détection du signal optique, chacun respectivement sous la forme d'un signal qui comprend une composante de polarisation verticale Vsp, Vtm, Vte et une composante de polarisation horizontale Hsp, Htm, Hte orthogonales entre elles et décalées dans le temps,
- la composante de polarisation verticale Vsp, Vtm, Vte et la composante de polarisation horizontale Hsp, Htm, Hte sont décalées en temps l'une par rapport à l'autre, respectivement pour le signal pulsé SP et pour le signal optique OS,
- la composante de polarisation verticale Vsp du signal pulsé SP est parallèle à la composante de polarisation verticale Vtm, Vte du signal optique OS, et la composante de polarisation horizontale Hsp du signal pulsé SP est parallèle à la composante de polarisation horizontale Htm, Hte du signal optique OS, permettant de générer des interférences.

Selon un premier aspect, le premier sous-système comprend une source SPS générant un signal optique pulsé SP, au moins un duplicateur SPD-PX-TS qui divise le signal pulsé SP en deux répliques, introduit un croisement de polarisation et un décalage temporel entre les deux répliques, et combine ces deux répliques en un seul signal pulsé SP sortant, et au moins un diviseur PM-TSM-S qui divise le signal pulsé SP sortant du duplicateur SPD-PX-TS en deux répliques, et ajuste avec précision le décalage temporel entre les deux répliques, pour les composantes de polarisation verticale Vsp et horizontale Hsp du signal pulsé SP indépendamment.

Selon une forme d'exécution, le décalage temporel introduit entre les deux répliques par le duplicateur SPD-PX-TS est égal à la somme (Tp/2 + Td) de la moitié de la période Tp du signal pulsé SP et du temps-bit Td du signal optique OS.

Selon une autre forme d'exécution, le diviseur PM-TSM-S comprend deux cylindres de matériau piezoélectrique autour desquels est enroulée une fibre optique à maintien de polarisation dont la longueur varie sous l'effet de la tension appliquée, permettant un ajustement précis du décalage temporel entre les deux répliques, pour les composantes de polarisation verticale Vsp et horizontale Hsp du signal pulsé SP indépendamment.

Selon encore une autre forme d'exécution, les deux répliques du signal pulsé SP issues respectivement des deux sorties du diviseur PM-TSM-S sont déphasés d'une quadrature (π/2).

Selon un deuxième aspect, le deuxième sous-système comprend un séparateur PBS, qui reçoit un signal optique OS à visualiser et qui sépare le signal optique OS entrant en deux modes de propagation E1 et E2 linéaires et orthogonaux entre eux, et au moins un duplicateur DD-PX-TS qui divise le signal optique OS en deux répliques, introduit un croisement de polarisation et un décalage temporel entre les deux répliques, et combine ces deux répliques en un seul signal optique OS.

Selon une forme d'exécution, le décalage temporel TS fixe introduit entre les deux répliques par le duplicateur DD-PX-TS est égal à la moitié de la période Tp du signal pulsé SP.

Selon un troisième aspect, le dispositif pour l'échantillonnage et la détection du signal optique OS comprend des photodétecteurs équilibrés, des lignes à retard temporel fixe FDL, des comparateurs des signaux électriques émis par les photodétecteurs équilibrés, et un convertisseur analogique-numérique à deux entrées.

Selon un mode de réalisation, les liaisons sont réalisées au moyen de fibres optiques à maintien de polarisation.

Selon un autre mode de réalisation, le système de visualisation par échantillonnage optique linéaire comporte en outre des coupleurs à maintien de polarisation.

Comme on l'a vu plus haut, un système complet de détection hétérodyne linéaire nécessite donc aujourd'hui de multiplier par huit le schéma de base de la détection hétérodyne linéaire, ce qui nécessite la présence de seize photodétecteurs équilibrés. L'invention permet de multiplier seulement par quatre le schéma de détection hétérodyne de base, soit une réduction d'un facteur deux par rapport au système complet connu.

En effet l'avantage de ce système est de ne pas dupliquer le schéma de base de la détection hétérodyne linéaire, tout en utilisant l'échantillonnage double avec deux impulsions courtes séparées par au moins un temps-bit. Cet échantillonnage double est réalisé en dupliquant l'impulsion d'échantillonnage, et en tournant leur polarisation optique de π/2, afin que la double impulsion dupliquée se retrouve orthogonale au doublet d'impulsions initiales. Il est alors nécessaire de copier le signal optique à échantillonner et de tourner sa polarisation de 90°, afin que la détection hétérodyne linéaire de la copie du signal optique ait bien lieu dans les photo-détecteurs équilibrés. Afin que les signaux électriques correspondant aux deux paires d'impulsions soient bien distingués, il est en outre nécessaire de séparer temporellement ces deux paires d'impulsions. Dans le mode de réalisation décrit, cette séparation temporelle est d'une demi-période du signal d'échantillonnage.

L'invention a aussi pour objet un procédé de visualisation par échantillonnage optique linéaire d'un signal optique OS complexe mis en oeuvre au moyen de ce système par échantillonnage optique linéaire. Le procédé comprend d'une part les étapes
- on émet un signal pulsé SP,
- on divise le signal pulsé SP en deux répliques en introduisant un croisement de polarisation et un décalage temporel entre les deux répliques,
- on combine les deux répliques en un seul signal résultant comprenant une composante de polarisation verticale Vsp et une composante de polarisation horizontale Hsp orthogonales entre elles et décalées dans le temps,
- on divise le signal pulsé SP résultant en deux répliques, et on règle avec précision le décalage temporel entre elles,
- on introduit les deux répliques du signal pulsé SP dans le dispositif pour l'échantillonnage et la détection du signal optique OS,

Le procédé comprend d'autre part les étapes
- on sépare un signal optique OS en deux modes de propagation E1 et E2 orthogonaux entre eux,
- on divise un mode de propagation E1, E2 en deux répliques en introduisant un croisement de polarisation et un décalage temporel entre les répliques,
- on combine les deux répliques en un seul signal résultant comprenant une composante de polarisation verticale Vtm, V t e et une composante de polarisation horizontale Htm, Hte orthogonales entre elles et décalées dans le temps,
- on divise le signal optique OS résultant en deux répliques, et on introduit un décalage temporel fixe entre elles,
- on introduit les deux répliques du signal optique OS dans le dispositif pour l'échantillonnage et la détection du signal optique OS.

La présente invention a donc comme avantage d'éviter le doublement des dispositifs nécessaires au traitement d'une seule composante d'un signal optique complexe pour obtenir un système de visualisation capable de traiter les deux composantes d'un tel signal. De ce fait le système de visualisation proposé est plus simple et moins coûteux que les systèmes existants. Ce système de visualisation par échantillonnage optique linéaire est notamment destiné à être utilisé pour tester des circuits photoniques intégrés PIC (pour "Photonic Integrated Circuit" en anglais).

### DESCRIPTION DES FIGURES

D'autres caractéristiques et avantages de la présente invention apparaîtront à la lecture de la description qui suit d'un mode de réalisation, donné bien entendu à titre illustratif et non limitatif, et dans le dessin annexé sur lequel
- la figure 1 illustre un mode de réalisation de l'ensemble du système de visualisation par échantillonnage optique linéaire d'un signal codé en phase et/ou en amplitude,
- la figure 2 illustre de manière schématique et simplifiée une partie d'un système de visualisation par échantillonnage optique linéaire de la figure 1,
- la figure 3 illustre en détail un duplicateur PSD-PX-TS pour la duplication des impulsions d'échantillonnage,
- la figure 4 illustre en détail un duplicateur DD-PX-TS pour la duplication des données du signal optique,
- la figure 5 illustre en détail un diviseur PM-TSM-S pour l'ajustement fin du décalage temporel,
- la figure 6 illustre en détail un dispositif BD-AC pour l'échantillonnage et la détection du signal optique,
- la figure 7 illustre le système complet de visualisation par échantillonnage optique linéaire.

### DESCRIPTION DETAILLEE

### Ensemble du système de visualisation par échantillonnage optique linéaire

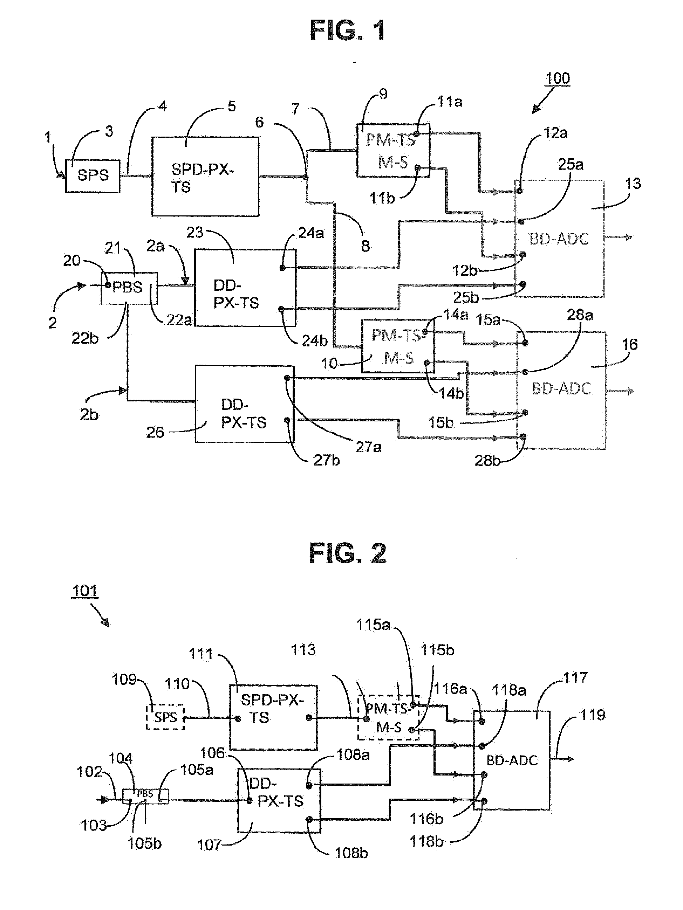

La figure 1 illustre un mode de réalisation de l'ensemble du système de visualisation par échantillonnage optique linéaire de signaux optiques OS (pour "Optical Signal" en anglais) complexes (codé en phase et/ou en amplitude) à très haut débit. Dans la réalité, le signal optique OS à visualiser se propage selon un mode inconnu. On projette donc le signal optique OS entrant dans le système sur deux modes de propagation linéaires arbitraires, orthogonaux entre eux, dénommés mode E1 et mode E2. Cette orthogonalité doit être prise dans son sens le plus large, c'est-à-dire dans son sens algébrique, et n'est pas limité au sens de la perpendicularité. Ces modes de propagation E1 et E2 peuvent, par exemple, correspondre respectivement au mode transverse magnétique TM et au mode transverse électrique TE du signal optique OS vectoriel guidé dans une fibre à maintien de polarisation PMF (pour "Polarization Maintaining Fiber" en anglais).

Pour faciliter la compréhension, le système de visualisation par échantillonnage optique linéaire **100,** illustré par la figure 1, est décomposé en un premier sous-système **1** relatif au signal contenant les impulsions d'échantillonnage et un sous-système **2** relatif au signal optique à analyser contenant les données transmises.

### Premier sous-système relatif au signal contenant les impulsions d'échantillonnage

Le premier sous-système **1** relatif au signal contenant les impulsions d'échantillonnage comprend une source laser SPS **3** (pour "Sampling Source Pulse" en anglais) qui émet un signal pulsé SP d'échantillonnage (pour "Sampling Pulse" en anglais), porté par une fibre optique PMF **4** à maintien de polarisation (pour "Polarization Maintaining Fiber" en anglais). Le signal pulsé SP est envoyé dans un duplicateur SPDPX-TS **5** (pour "Sampling Pulse Duplicator with Polarization Crossing and Time Shifting" en anglais) qui divise le signal pulsé SP en deux répliques, et simultanément introduit un croisement de la polarisation PX (pour "Polarisation Crossing" en anglais) et un décalage temporel TS (pour "Time Shifting" en anglais) entre ces deux répliques. On entend par division d'un signal la production de deux répliques identiques ayant chacune la moitié de la puissance du signal entrant. Ces deux répliques de polarisation croisées et décalées en temps sont ensuite recombinées de manière à produire un signal pulsé SP dupliqué sortant. Le signal pulsé SP dupliqué sortant comporte ainsi une composante de polarisation dite verticale Vsp et une composante de polarisation dite horizontale Hsp avec un décalage temporel entre ces deux composantes de polarisation. Dans le cas présent, la composante de polarisation verticale Vsp est décalée d'une demi-période plus un temps-bit par rapport à la composante de polarisation horizontale Hsp.

Les composantes de polarisation verticale Vsp et horizontale Hsp représentent des vecteurs homogènes à un champ optique (ou champ électro-magnétique) issus d'une décomposition du champ optique constituant le signal pulsé SP. Cette décomposition se fait sur une base de vecteurs propres connus, car arbitrairement choisis par l'utilisateur, par exemple le mode de propagation transverse magnétique TM ou le mode de propagation transverse électrique TE d'une fibre PMF à maintien de polarisation. Les composantes de polarisation verticale Vsp et horizontale Hsp sont par exemple des vecteurs orthogonaux, et si le signal pulsé SP est le vecteur originel, on a alors la relation vectorielle : SP = Vsp + Hsp.

Le duplicateur SPD-PX-TS **5** est suivi d'un coupleur **6** qui divise le signal dupliqué en deux répliques, chacune se propageant dans l'un des deux bras **7** et **8** qui alimentent respectivement les diviseurs PM-TSM-S **9** et **10** (pour "Polarization Maintaining and Time-Shifting Maintaining Splitter" en anglais). Dans la suite, on désigne par "coupleur" un dispositif apte à assurer aussi bien la fonction de coupler des signaux optiques que la fonction de diviser un signal optique selon le sens dans lequel il est placé par rapport au sens de circulation du signal optique.

Chacun des diviseurs PM-TSM-S **9** et **10** réalise la division du signal pulsé SP dupliqué avec maintien de la polarisation et du décalage temporel précédemment introduits. Le diviseur PM-TSM-S **9** divise le signal entrant par le bras **7** en deux répliques comportant chacune une composante de polarisation verticale Vsp et une composante de polarisation horizontale Hsp avec un décalage temporel entre ces deux composantes. Le diviseur PM-TSM-S **9** effectue aussi sur le trajet de l'une des deux répliques obtenues un réajustement précis du décalage temporel par rapport à l'autre réplique. Les deux répliques sont recueillies respectivement aux sorties **11a** et **11b** du diviseur PM-TSM-S **9.** Les deux répliques, ayant chacune la forme d'un signal unique comprenant des composantes de polarisation verticale Vsp et Hsp, sont alors introduites aux entrées **12a** et **12b** respectivement d'un dispositif BD-ADC **13** (pour "Balanced Detector and Analogic to Digital Converter" en anglais) pour l'échantillonnage et la détection du signal optique OS. De même le diviseur PM-TSM-S **10** effectue une division du signal entrant par le bras **8** en deux répliques avec un réajustement précis du décalage temporel entre elles. Les deux répliques sont recueillies respectivement aux sorties **14a** et **14b** du diviseur PM-TSM-S **10.** Ces deux répliques, ayant chacune la forme d'un signal unique comprenant des composantes de polarisation verticale Vsp et horizontale Hsp, sont alors introduites aux entrées **15a** et **15b** respectivement d'un dispositif BD-ADC 16 pour l'échantillonnage et la détection du signal optique OS porteur des données.

### Deuxième sous-système relatif au signal optique à analyser

Le signal optique OS à analyser entre dans le sous-système **2** du système de visualisation par échantillonnage optique linéaire **100** par le port d'entrée **20** d'un séparateur PBS **21** (pour "Polarisation Beam Splitter" en anglais) qui permet de séparer l'un de l'autre les deux modes de propagation E1 et E2, par exemple respectivement le mode transverse magnétique TM et le mode transverse électrique TE. Le mode transverse magnétique TM, qui est recueillie à la sortie **22a** du séparateur PBS **21** et injectée dans la branche **2a** du sous-système **2,** est séparée du mode transverse électrique TE, qui est recueilli à la sortie **22b** du séparateur PBS **21** et injecté dans la branche **2b** du sous-système **2.**

La branche **2a** relative au mode transverse magnétique TM comprend un duplicateur DD-PX-TS **23** (pour "Data Duplicator with Polarization Crossing-Time Shifting" en anglais). Le duplicateur DD-PX-TS **23** effectue la division en deux répliques du mode transverse magnétique TM et introduit un croisement de la polarisation PX et un décalage en temps TS entre les deux répliques. Le mode transverse magnétique TM est alors divisé en deux répliques, chacune comprenant une composante de polarisation dite verticale Vtm et une composante de polarisation dite horizontale Htm. Les deux répliques sont recueillies respectivement aux sorties **24a** et **24b** du duplicateur DD-PX-TS **23.** Les deux répliques du mode transverse magnétique TM du signal optique OS sont alors mélangées avec le signal impulsionnel issu de la source laser SPS **3,** selon le processus d'hétérodynage décrit précédemment. Puis, une fois mélangées, les deux répliques sont introduites aux entrées **25a** et **25b** respectivement du dispositif BD-ADC **13** pour l'échantillonnage et la détection du signal optique OS en vue de son affichage après traitement électronique, par exemple sous la forme d'un diagramme de constellation ou encore d'un diagramme de l'oeil dans le cas où le signal OS initial est uniquement polarisé selon le mode transverse magnétique TM.

La branche **2b** relative au mode transverse électrique TE comprend un duplicateur DD-PX-TS **26** qui effectue la division en deux répliques du mode transverse électrique TE du signal optique OS, et qui introduit un croisement de la polarisation PX et un décalage en temps TS entre les deux répliques. Le mode transverse électrique TE est divisée en deux répliques, chacune comprenant une composante de polarisation dite verticale Vte et une composante de polarisation dite horizontale Hte qui sont recueillies respectivement aux sorties **27a** et **27b** du duplicateur DD-PX-TS **26.** Les deux répliques du mode transverse électrique TE du signal optique OS sont alors mélangées avec le signal impulsionnel issu de la source laser SPS **3,** selon le processus d'hétérodynage décrit précédemment. Puis, une fois mélangées, les deux répliques sont introduites aux entrées **28a** et **28b** respectivement du dispositif BD-ADC **16** pour l'échantillonnage et la détection du signal optique OS en vue de son affichage après traitement électronique, par exemple sous la forme d'un diagramme de constellation ou encore d'un diagramme de l'oeil dans le cas où le signal OS initial est uniquement polarisé selon le mode transverse électrique TE.

Le schéma du système de visualisation par échantillonnage optique linéaire, tel qu'illustré par la figure 1, est donc plus simple et plus économique à fabriquer que les systèmes existants.

Dans ce cas, où la polarisation du signal OS initial est quelconque et inconnue, la visualisation du diagramme de constellation ou du diagramme de l'oeil sera réalisée après le traitement combiné du signal issu de la branche 2a, relative au mode transverse magnétique TM, et du signal issu de la branche 2b, relative au mode transverse électrique TE.

Les composantes de polarisation horizontales Htm et Hte, correspondant respectivement au mode de propagation transverse magnétique TM et au mode de propagation transverse électrique TE du signal optique OS, sont des vecteurs homogènes à un champ optique. Ils sont parallèles à la composante de polarisation horizontale Hsp du signal pulsé, le long d'un guide d'onde transportant les composantes de polarisation du signal pulsé SP et du signal optique OS vers le dispositif pour l'échantillonnage et la détection du signal optique OS. Ils s'obtiennent en décomposant le champ optique du signal optique OS à analyser sur une base de vecteurs propres connus. Les vecteurs propres sont orthogonaux entre eux, ainsi que la projection du signal OS sur les vecteurs propres. Ensuite les deux composantes de polarisation horizontales Htm et Hte sont séparées dans le temps, puis rendues parallèles à la direction de la composante de polarisation horizontale Hsp.

Par conséquent, le module du vecteur de la composante de polarisation horizontale Htm relative au mode de propagation transverse magnétique TM est égal au module du vecteur de la composante de polarisation verticale Vtm. Le module du vecteur de la composante de polarisation horizontale Hte relative au mode de propagation transverse électrique TE est égal au module du vecteur de la composante de polarisation verticale Vte. Une combinaison adéquate des composantes de polarisation horizontales Htm et Hte permet de retrouver le vecteur initial du signal optique OS, ainsi qu'une combinaison adéquate des composantes de polarisation verticale Vtm et Vte permet de retrouver le vecteur initial du signal optique OS.

Il convient de noter que, dans le cas présent, un bit de composante de polarisation horizontale Htm est décalé d'une demi-période par rapport à un bit de composante de polarisation verticale Vtm. De même un bit de composante de polarisation horizontale Hte est décalé d'une demi-période par rapport à un bit de composante de polarisation verticale Vte. Tandis que la composante de polarisation verticale Vsp est décalée d'une demi-période plus un temps-bit par rapport à la composante de polarisation horizontale Hsp.

Toutefois, selon un autre mode de réalisation, la composante de polarisation verticale Vsp peut être décalée d'une demi-période par rapport à la composante de polarisation horizontale Hsp, cependant qu'un bit de composante de polarisation horizontale Htm peut être décalé d'une demi-période plus un temps-bit par rapport à un bit de composante de polarisation verticale Vtm. De même, un bit de composante de polarisation horizontale Hte peut alors être décalé d'une demi-période plus un temps-bit par rapport à un bit de composante de polarisation verticale Vte.

L'état de polarisation du signal optique OS à visualiser étant inconnu, on le projette sur deux modes de propagation E1 et E2 arbitraires orthogonaux qui correspondent, dans l'illustration donnée ici, respectivement au mode transverse magnétique TM et au mode transverse électrique TE du signal optique OS. Il faut aussi remarquer que le trajet dans la branche **2a** du sous-système **2** suivi par l'un des modes de propagation E1 du signal optique OS à visualiser, ici le mode transverse magnétique TM, est semblable par sa nature et par sa longueur au trajet suivi par l'autre mode de propagation E2, ici le mode transverse électrique TE , dans la branche 2b du sous-système **2.** De même, les trajets **7** et **8** du sous-système **1** suivis par le signal impulsionnel SP issu de la source SPS **3** sont semblables entre eux par leur nature et par leur longueur. Il convient enfin de préciser que les modes de propagation E1 sont parallèles entre eux dans les répliques arrivant aux entrées **12a, 25a** et **12b, 25b** du dispositif BD-ADC **13.** De même les modes de propagation E2 sont également parallèles entre eux dans les répliques arrivant aux entrées **15a, 28a** et **15b, 28b** du dispositif BD-ADC **16.**

Ainsi, à cause du caractère inconnu du mode de propagation du signal optique OS à visualiser, il est nécessaire de reproduire à l'identique le schéma de visualisation d'un signal dont le mode de propagation serait parfaitement connu (par exemple rectiligne). La détection simultanée des composantes de polarisation verticale Vsp, Vtm et Vte d'une part, et des composantes de polarisation horizontale Hsp, Htm et Hte d'autre part, permet d'échantillonner un signal complexe OS. Un traitement électronique permet alors la visualisation du signal complexe OS. Il est donc important que les composantes de polarisation verticale Vsp, Vtm et Vte d'une part, et les composantes de polarisation horizontale Hsp, Htm et Hte d'autre part soient bien définies dans un plan perpendiculaire à l'axe optique situé juste avant que ces composantes de polarisation ne soient détectées par chacun des photodétecteurs équilibrés.

Dans la description qui suit, on pourra se baser sur le schéma simplifié de la figure 2, qui est le schéma de visualisation d'un signal optique OS pour un seul mode de propagation E1, ici le mode transverse magnétique TM dont le trajet commence au port de sortie **105a** de la figure 2.

### Partie du système de visualisation par échantillonnage relative au mode transverse magnétique du signal optique

On considère la figure 2 qui est une illustration simplifiée d'une partie **101** du système de visualisation par échantillonnage **100** de la figure 1, dans laquelle seul le trajet suivi par l'un des modes de propagation , ici le mode transverse magnétique TM, du signal optique OS vectoriel, entrant dans le système de visualisation par échantillonnage **100,** a été représenté.

Un signal optique OS codé en phase et/ou en amplitude contenant les données transmises, dont le mode de propagation est projetée sur un mode de propagation propre au sens algébrique du terme, par exemple une direction linéaire arbitraire mais connue, est transporté dans une fibre optique **102** standard dite SMF (pour "Single Mode Fiber" en anglais). Le mode de propagation du signal optique OS entrant, d'un débit binaire de 10 Gb/s par exemple, est indéterminé. Le signal optique OS est injecté à l'entrée **103** d'un séparateur PBS **104** de polarisation qui décompose le signal optique OS vectoriel en deux modes de propagation orthogonaux : un mode transverse magnétique TM de polarisation verticale et un mode transverse électrique TE de polarisation horizontale pour le cas de la figure 2 où les liaisons sont réalisées au moyen de guides d'onde, notamment des fibres optiques PMF à maintien de polarisation.

Le mode transverse magnétique TM du signal optique OS recueilli à la sortie **105a** du séparateur PBS **104** est envoyé au port d'entrée **106** d'un duplicateur DD-PX-TS **107** qui divise le mode transverse magnétique TM en deux répliques, réalise un croisement de la polarisation PX et introduit un décalage en temps TS entre les deux répliques du signal optique OS. Ces deux répliques sont combinées puis redivisées pour produire à nouveau deux répliques, chacune comprenant une composante de polarisation verticale Vtm et une composante de polarisation horizontale Htm qui sont recueillies respectivement aux sorties **108a** et **108b** du duplicateur DD-PX-TS **107.**

Le mode transverse électrique TE du signal optique OS suit un chemin différent (non représenté) à la sortie **105b** du séparateur PBS **104.**

Le système partiel de visualisation par échantillonnage **101** comprend d'autre part une source laser SPS **109** émettant des impulsions brèves (de l'ordre de 1 ps). La source SPS **109** génère un signal pulsé d'échantillonnage SP dans une fibre optique PMF **110.** Les impulsions d'échantillonnage SP sont par exemple d'une durée τ d'une picoseconde, permettant d'observer des évènements rapides, séparées par une plage d'amplitude nulle avec une cadence de répétition de 20 MHz. Ces impulsions d'échantillonnage SP sont injectées dans un duplicateur SPD-PX-TS **111.**

Le duplicateur SPD-PX-TS **111** divise le signal pulsé d'échantillonnage SP en deux répliques, croise leur polarisation PX et introduit un décalage temporel TS entre les deux répliques d'une durée précise correspondant à la somme (Tp/2 + Td) de la moitié de la période Tp du signal pulsé d'échantillonnage SP et du temps-bit Td du signal optique OS vectoriel. Par exemple, on peut avoir une période d'échantillonnage Tp de 50 nanosecondes (soit 20 MHz) et un temps-bit Td du signal optique OS vectoriel de 100 picosecondes (soit 10 Gb/s), La division du signal a pour but de résoudre le problème de la faible cohérence des sources laser impulsionnelles SPS ou de la faible cohérence des signaux optiques OS à analyser. Puis ces deux répliques sont recombinées. Une seule fibre optique PMF **112** à maintien de polarisation assure le transport du signal pulsé SP recombiné, comprenant une composante verticale Vsp et une composante horizontale Hsp, depuis la sortie du duplicateur SPD-PX-TS **111** jusqu'à l'entrée **113** du diviseur PM-TSM-S **114.**

Le diviseur PM-TSM-S **114** réalise la division du signal entrant en deux répliques avec maintien de la polarisation et du décalage temporel précédemment introduits. Un passage des trains d'impulsions d'échantillonnage SP par le diviseur PM-TSM-S **114** permet un réajustement précis du décalage temporel TS entre les deux répliques. Ce réajustement est rendu nécessaire pour permettre de réaliser la quadrature (π/2) des signaux entre les deux sorties **115a** et **115b** du diviseur PM-TSM-S **114** afin d'obtenir simultanément la partie réelle et la partie imaginaire du signal optique OS à échantillonner. Les deux répliques du signal pulsé SP sont recueillies respectivement aux sorties **115a** et **115b** du diviseur PM-TSM-S **114.**

Les deux répliques du signal pulsé SP, ayant chacune la forme d'un signal unique comprenant une composante verticale Vsp et une composante horizontale Hsp, sont alors introduites aux entrée **116a** et **116b** respectivement d'un dispositif BD-ADC **117.** De même, les deux répliques issues du mode transverse magnétique TM du signal optique OS, ayant chacune la forme d'un signal unique comprenant une composante verticale Vtm et une composante horizontale Htm, sont introduites aux entrée **118a** et **118b** respectivement du dispositif BD-ADC **117.** Le dispositif BD-ADC **117** est destiné à l'acquisition et au traitement du signal à échantillonner et numériser. Les deux répliques du signal pulsé SP issues respectivement des deux sorties **115a** et **115b** du diviseur PM-TSM-S **114** sont déphasés d'une quadrature (π/2). Il n'y a pas de décalage temporel entre les signaux arrivant aux entrées **116a** et **118a** d'une part, et aux entrées **116b** et **118b** d'autre part, du dispositif BD-ADC **117.**

Les deux répliques du mode transverse magnétique TM du signal optique OS sont échantillonnées par le train d'impulsions d'échantillonnage linéaire SP provenant de la source laser **109.** Enfin on recueille, à la sortie **119** du système partiel de visualisation par échantillonnage **101,** l'information recherchée sous la forme d'un signal numérique et complexe portant au moins sur l'amplitude et la phase du signal optique OS à analyser échantillonné et numérisé. La sortie **119** se présente sous la forme d'un tableau numérique de nombres complexes. Ce tableau est obtenu après un traitement numérique sur les données numériques acquises par un convertisseur analogique/numérique. Ce traitement consiste tout d'abord à séparer les échantillonnages sur les composantes de polarisation verticale Vtm et horizontale Htm, à les normaliser, puis en soustrayant élément par élément ces deux tableaux entre eux, à obtenir l'information sur le codage du signal optique OS échantillonné. Cette information est ensuite récupérée et affichée, par exemple sous la forme d'un diagramme de constellation, avec un taux de rafraîchissement du diagramme (supérieur à 1 Hz) qui est compatible avec le besoin de mesure et d'analyse en temps réel des utilisateurs finaux.

### Duplicateur SPD-PX-TS

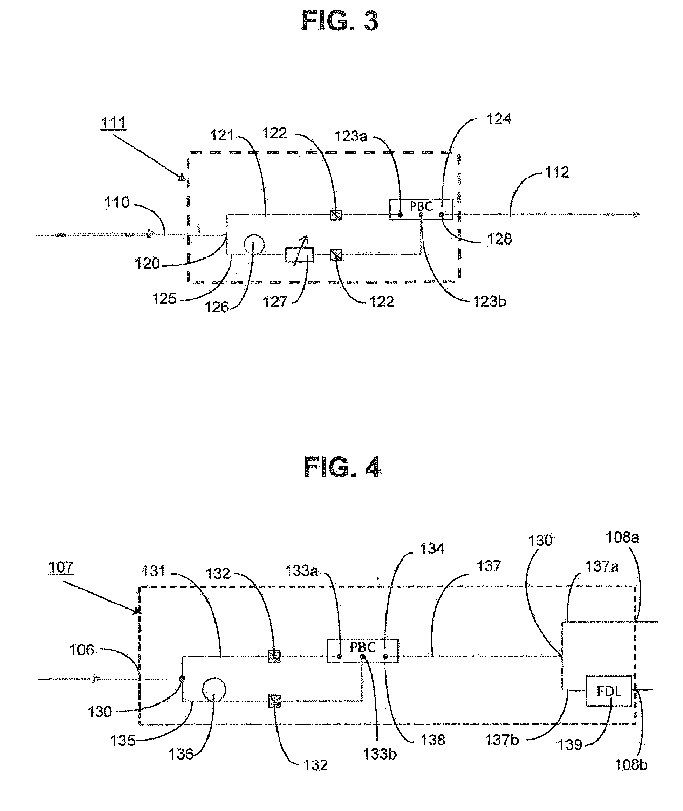

Le duplicateur SPD-PX-TS **111** de la figure 2 est illustré de manière plus détaillée sur la figure 3, afin d'expliquer comment le train d'impulsions d'échantillonnage SP, issu de la source laser SPS **109,** est dupliqué avec un croisement de la polarisation PX et un décalage en temps TS.

Le signal pulsé SP d'échantillonnage, ayant un mode de propagation de polarisation verticale et porté par la fibre optique PMF **110,** est envoyé dans le duplicateur SPD-PX-TS **111.** La division du signal pulsé SP d'échantillonnage en deux répliques est obtenue au moyen d'un coupleur PMC **120** à maintien de polarisation (pour "Polarization Maintaining Coupler" en anglais).

Un premier bras **121** situé après le coupleur PMC **120** est relié via un connecteur **122** au premier port d'entrée **123a** d'un combineur PBC **124** de polarisation (pour "Polarisation Beam Combiner" en anglais). Le combineur PBC **124** peut être par exemple un appareil commercialement disponible.

Un second bras **125** situé après le coupleur PMC **120** est relié également via un connecteur **122** au second port d'entrée **123b** du combineur PBC **124.** Le second bras **125** comporte deux lignes à retard temporel. Une première ligne à retard temporel fixe **126** introduit un décalage temporel qui est égal à la moitié de la période Tp du signal pulsé d'échantillonnage SP, ce décalage temporel Tp/2 pouvant être fixé une fois pour toutes car il dépend de la source SPS **109** utilisée. Une seconde ligne à retard temporel **127** est une ligne à retard accordable dite TDL (pour "Tunable Delay Line" en anglais) introduisant un décalage de temps égal à un temps-bit Td du signal optique OS vectoriel qui dépend du débit binaire du signal optique OS vectoriel à échantillonner. Par exemple le temps-bit Td vaut 100 ps pour un débit binaire de 10 Gb/s. Ainsi le décalage temporel total entre le premier **121** et le second **125** bras du combineur PBC **124** est égal à (Tp/2 + Td). La réplique du signal pulsé SP qui circule dans le bras **125,** initialement de polarisation verticale Vsp, est tournée de 90° pour produire un signal ayant un mode de propagation de polarisation horizontale Hsp, cette rotation étant appliquée juste avant ou juste après l'entrée **123b** du signal dans le combineur PBC **124.**

La réplique du signal pulsé SP arrivant par le bras **121,** ayant une composante de polarisation verticale Vsp, entre par le port d'entrée **123a** dans le combineur PBC **124,** alors que la réplique du signal pulsé SP arrivant par le bras **125,** ayant une composante de polarisation horizontale Hsp, entre par le port d'entrée **123b** dans le combineur PBC **124.**

Les répliques du signal pulsé SPS conduites par le premier **121** et par le second **125** bras sont combinés en un seul signal circulant dans une seule fibre PMF **112** à la sortie **128** du combineur PBC **124,** mais le signal sortant a la forme d'un signal unique comprenant une composante verticale Vsp et une composante horizontale Hsp. Un combineur PBC est un composant commercial dont la fonction est de combiner deux signaux optiques provenant de deux fibres afin que le signal combiné puisse être transporté par une seule fibre. En sens inverse, un séparateur PBS sépare un signal optique transporté par une fibre optique en deux signaux ayant des modes de propagation orthogonaux qui sont transportés respectivement dans deux fibres.

Au port de sortie **128** du combineur PBC **124,** on obtient un train d'impulsions d'échantillonnage SP ayant deux composantes de polarisation croisée PX et un décalage temporel TS précis et finement accordé qui vaut (Tp/2 + Td). Le fait que le signal pulsé d'échantillonnage SP sortant, comprenant une composante de polarisation verticale Vsp et une composante de polarisation horizontale Hsp, soit issu de la combinaison réalisée par le combineur PBC **124** est une fonction importante du système de visualisation par échantillonnage dans la mesure où une seule fibre optique **112,** reliée à la sortie **128** du duplicateur SPD-PX-TS **111,** assure le transport de ce signal pulsé SP, dupliqué et décalé temporellement avec précision, jusqu'au diviseur PM-TSM-S **114.**

Le mode de réalisation illustré ici comporte des connecteurs **122.** Ces connecteurs **122** ont pour fonction de réaliser la jonction entre deux portions de fibre PMF, mais on pourrait bien entendu utiliser tout autre moyen de jonction, tel qu'une soudure par exemple.

### Duplicateur DD-PX-TS

La figure 4 illustre en détail le duplicateur DD-PX-TS **107** permettant la division du signal optique OS, contenant des données, avec l'introduction d'un croisement de la polarisation PX et d'un décalage en temps TS. Le mode transverse magnétique TM du signal optique OS, sortant du séparateur PBS **104** porté par une fibre optique PMF, entre dans le duplicateur DD-PX-TS **107** par le port d'entrée **106.** La division du mode TM du signal optique OS en deux répliques est obtenue au moyen d'un coupleur PMC **130** à maintien de polarisation.

Un premier bras **131** situé après le coupleur PMC **130** est relié au moyen d'un connecteur **132** au premier port d'entrée **133a** d'un combineur PBC **134** afin de l'alimenter avec l'une des répliques, ayant un mode de propagation de polarisation verticale Vtm, du mode transverse magnétique TM du signal optique OS à échantillonner. Le mode de réalisation illustré ici comporte des connecteurs **132.** Ces connecteurs **132** ont pour fonction de réaliser la jonction entre deux portions de fibre PMF, mais on pourrait bien entendu utiliser tout autre moyen de jonction, tel qu'une soudure par exemple.

Un second bras **135** situé après le coupleur PMC **130** est relié via un connecteur **132** au second port d'entrée **133b** du combineur PBC **134** pour l'alimenter avec l'autre réplique du mode transverse magnétique TM du signal optique OS. La polarisation de la réplique du signal optique OS qui circule dans le bras **135,** initialement verticale, est tournée de 90° pour produire un signal ayant un mode de propagation de polarisation horizontale Htm, cette rotation étant appliquée juste avant ou juste après l'entrée **133b** du signal dans le combineur PBC **134.** Le second bras **135** comporte aussi une ligne de retard temporel **136** qui impose à la réplique du mode transverse magnétique TM du signal optique OS qui y circule, un décalage de temps TS fixe (Tp/2) qui est égal à la moitié de la période Tp du signal pulsé d'échantillonnage SP et dépend de la source SPS **109** utilisée. Alternativement une ligne à retard temporel accordable, dite TDL, pourrait être ajoutée sur le second bras **135** du duplicateur DD-PX-TS **107,** à condition de supprimer la ligne à retard temporel accordable **127** du second bras **125** du duplicateur SPD-PX-TS **111.**

Les signaux conduits par le premier **131** et le second **135** bras sont combinés dans une seule et même fibre PMF **137** à la sortie **138** du combineur PBC **134** mais comprenant deux composantes de polarisation orthogonales et un décalage temporel TS fixe de Tp/2 entre les deux composantes de polarisation verticale Vtm et horizontales Htm. Un coupleur **130** permet de diviser ce signal en deux signaux optiques OS qui sont ensuite répartis entre deux fibres PMF **137a** et **137b,** issues de la fibre **137,** conduisant respectivement aux sorties **108a** et **108b** du duplicateur DD-PX-TS **107.** Les fibres PMF **137a** et **137b** aboutissent respectivement aux entrées **118a** et **118b** du dispositif BD-ADC **117.** La détection équilibrée nécessite que les deux signaux optiques OS contenant les données arrivent en même temps au dispositif BD-ADC **117** par les deux fibres optique PMF **137a** et **137b.** Le signal transporté par l'un des bras **137b** a en outre un décalage temporel fixe par rapport au signal transporté par l'autre bras **137a** introduit par une ligne à retard temporel optique fixe **139,** qui est dite FDL (pour "Fixed Delay Line" en anglais). Ce décalage est fixé une fois pour toute et il est ajusté afin d'égaliser les délais d'acheminement des signaux optiques entre la sortie **138** et l'entrée **118a** d'une part et d'autre part entre la sortie **138** et l'entrée **118b** dans le dispositif BD-ADC **117.**

### Diviseur PM-TSM-S

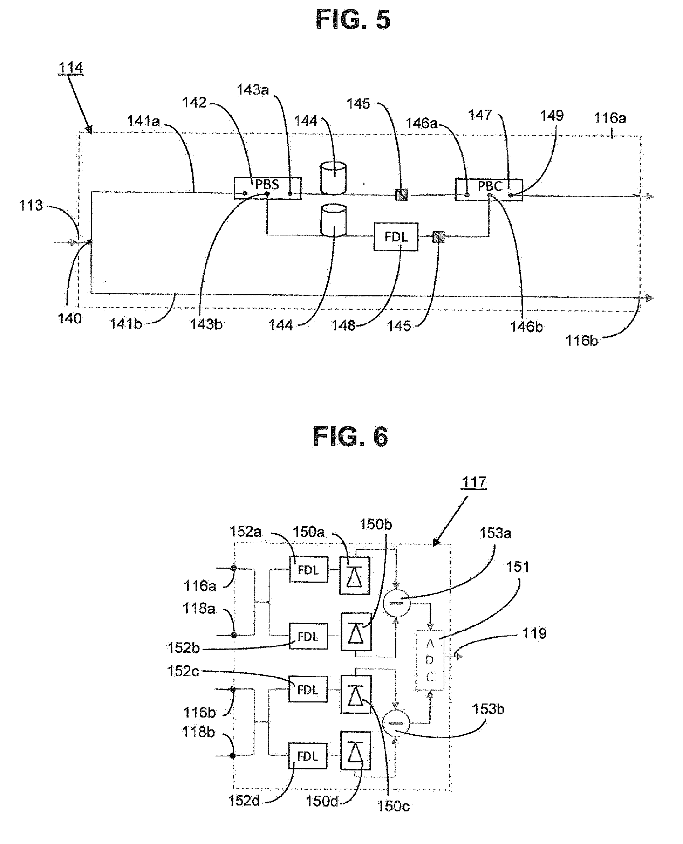

La figure 5 illustre en détail le diviseur PM-TSM-S **114** d'ajustement du décalage temporel du signal pulsé SP avant son entrée dans le dispositif BD-ADC **117,** afin d'expliquer la manière dont un ajustement finement accordé du décalage temporel est obtenu. Cet ajustement est rendu nécessaire pour permettre de réaliser la quadrature entre les deux sorties du dispositif **114** afin d'obtenir simultanément la partie réelle et la partie imaginaire du signal à échantillonner. Les signaux transportés par les fibres optiques PMF à l'intérieur du système de visualisation par échantillonnage peuvent subir des perturbations, liées à la température et/ou d'ordre mécanique, qui sont susceptibles de causer des fluctuations aléatoires sur le délai d'arrivée des impulsions d'échantillonnage SP aux entrées **116a** et **116b** du dispositif BD-ADC **117** de détection, ce qui rend nécessaire de réajuster le décalage temporel. Ce réajustement précis du décalage temporel doit se faire de manière indépendante pour les deux composantes de polarisation verticale Vsp et horizontale Hsp dans les fibres PMF **141a** et **141b** car les chemins optiques sont différents pour les deux composantes de polarisation verticale Vsp et horizontale Hsp, et parce que les deux composantes de polarisation verticale Vsp et horizontale Hsp peuvent se comporter différemment en fonction des perturbations subies.

A son entrée dans le diviseur PM-TSM-S **114,** le signal pulsé SP, provenant du port de sortie **128** du duplicateur SPD-PX-TS **111** et porté par une fibre optique PMF **112** unique, est divisé grâce à un coupleur PMC **140** en deux répliques réparties entre deux bras **141a** et **141b.** Une réplique du signal pulsé SP, comprenant deux composantes de polarisation orthogonales, respectivement verticale Vsp et horizontale Hsp, se propage dans le bras **141a.** Une autre réplique du signal pulsé SP, comprenant aussi les deux composantes de polarisation, respectivement verticale Vsp et horizontale Hsp, se propage dans le second bras **141b,** et elle est envoyée directement à l'entrée **116b** du dispositif BD-ADC **117.** Le premier bras **141a** est utilisé pour réaliser l'ajustement précis du décalage temporel entre les deux répliques.

Le premier bras **141a** comporte un séparateur de polarisation PBS **142** qui sépare les deux composantes de polarisation verticale Vsp et horizontale Hsp du signal pulsé SP, la composante de polarisation verticale Vsp étant recueillie à la sortie **143a** du séparateur PBS **142,** alors que la composante de polarisation horizontale Hsp est recueillie à la sortie **143b.** La composante de polarisation verticale Vsp traverse un cylindre PZT **144** de matériau piézoélectrique, autour duquel est enroulée une fibre optique PMF, de manière à ce que la variation du diamètre du cylindre PZT **144** induise un réglage fin de la longueur de la fibre optique PMF, fournissant ainsi un ajustement précis du chemin optique. La tension électrique qui doit être appliquée au cylindre PZT **144** sera calculée par des circuits intégrés FPGA (pour "Field Programmable Gate Array" en anglais) qui utilisent comme signaux d'entrée les signaux de sortie du dispositif BD-ADC **117,** de telle sorte que les fluctuations à basse fréquence dans les différents chemins optiques puissent être corrigées en temps réel. Le cylindre piezzoélectrique PZT **144** doit permettre de réajuster précisément le décalage temporel afin de permettre de réaliser la quadrature entre les deux sorties **115a** et **115b** du diviseur PM-TSM-S **114** pour obtenir simultanément la partie réelle et la partie imaginaire du signal optique OS à échantillonner. Enfin le signal optique OS traverse un connecteur **145** avant d'aboutir à l'entrée **146a** d'un combineur PBC **147.** Le mode de réalisation illustré ici comporte des connecteurs **145.** Ces connecteurs **145** ont pour fonction de réaliser la jonction entre deux portions de fibre PMF, mais on pourrait bien entendu utiliser tout autre moyen de jonction, tel qu'une soudure par exemple.

De son côté, la composante de polarisation horizontal Hsp est envoyé au port d'entrée **146b** du combineur PBC **147,** après avoir traversé un cylindre PZT **144** dont la fonction a été décrite précédemment, une ligne à retard temporel fixe FDL **148** introduisant un décalage temporel permettant de compenser le décalage temporel de la composante de polarisation verticale Vsp, et un connecteur **145.** La présence d'une ligne à retard temporel fixe FDL **148** n'est pas indispensable dans ce cas, mais peut se révéler d'une utilisation pratique dans la mise en oeuvre réelle de l'appareil. Le signal pulsé SP d'échantillonnage recueilli à la sortie **149** du combineur PBC **147,** ayant la forme d'un signal unique comprenant une composante de polarisation verticale Vsp et une composante de polarisation horizontale Hsp, est envoyé à l'entrée **116a** du dispositif BD-ADC **117.**

Le diviseur PM-TSM-S **114** d'ajustement du décalage temporel du signal pulsé SP, illustré sur la figure 5, permet d'ajuster très finement la phase optique (donc le décalage temporel) des impulsions d'échantillonnage arrivant sur les photodiodes couplées, et ce pour les deux composantes de polarisation verticale Vsp et horizontale Hsp.

Les deux signaux pulsés SP, sortant du diviseur PM-TSM-S **114** et entrant dans le dispositif BD-ADC **117** par les entrées **116a** et **116b** respectivement, doivent avoir une différence de phase constante de π/2 précisément qui est obtenue grâce aux dispositifs piézoélectriques PZT **144**

### Dispositif BD-ADC

La figure 6 illustre en détail un dispositif BD-ADC **117** pour l'échantillonnage et la détection du signal optique OS en vue de récupérer l'information sur l'amplitude et la phase, sous la forme d'un diagramme de constellation par exemple. L'échantillonnage et la détection du signal optique OS sont obtenus en utilisant des détecteurs équilibrés BD **150a-150d** (pour "Balanced Detector" en anglais) et un convertisseur analogique-numérique ADC **151** (pour "Analogic to Digital Converter" en anglais) à deux entrées. Dans le dispositif BD-ADC **117** pour l'échantillonnage et la détection du signal optique OS, on utilise des lignes à retard temporel fixe FDL **152a-152d** introduisant un décalage temporel qui permet de compenser la différence constante de chemin optique entre les signaux arrivant sur les photodétecteurs équilibrés BD **150a-150d.** Cependant les lignes à retard temporel fixe FDL **152a-152d** peuvent être placées après les photodétecteurs BD **150a-150d,** et dans ce cas il s'agit de lignes à retard temporel électriques. Les signaux électriques émis par une paire de photodétecteurs jumelés **150a, 150b** ou **150c, 150d** sont envoyés dans un amplificateur différentiel **153a** ou **153b** respectivement, puis ces signaux électriques amplifiés sont entrés dans le convertisseur analogique-numérique ADC **151.** Les signaux électriques ne sont pas nuls seulement dans le cas où le signal optique OS et le signal pulsé SP sont présents simultanément sur les photodétecteurs équilibrés BD **150a-150d.** La fonctionnalité d'échantillonnage est ainsi réalisée par les deux paires de photodétecteurs **150a, 150b** et **150c, 150d.**

### Système complet

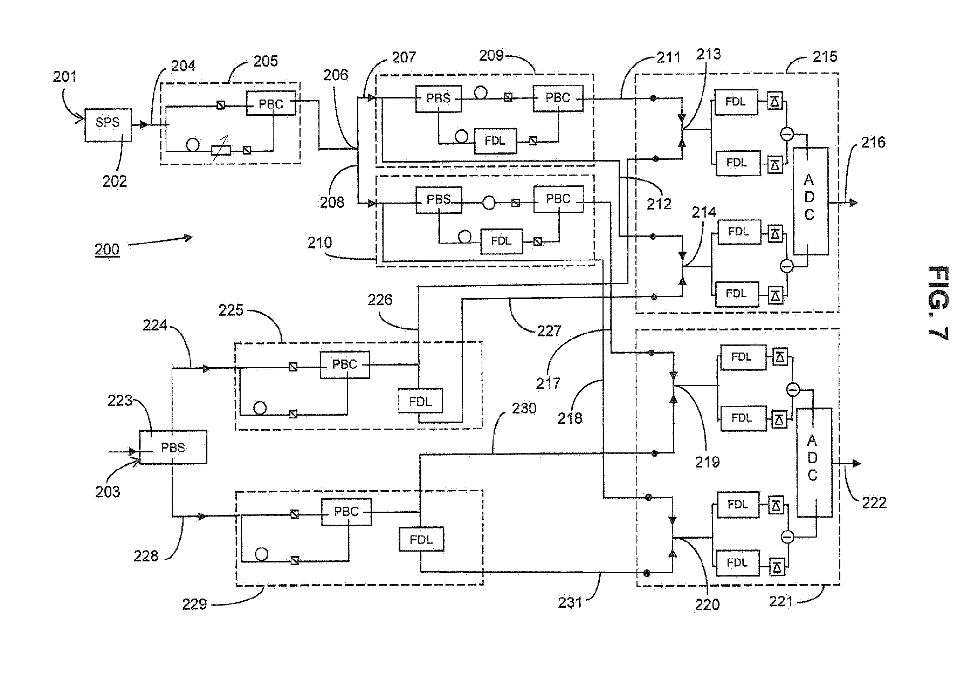

Le système complet permettant de visualiser des signaux optiques complexes à très haut débit, par échantillonnage optique linéaire ultra-rapide, est illustré de manière synthétique et plus détaillée sur la figure 7.

Le système de visualisation **200** comprend un sous-système **201** relatif au signal SP contenant les impulsions d'échantillonnage issu d'une source laser SPS **202** et un autre sous-système **203** relatif au signal optique OS à analyser.

Le signal pulsé d'échantillonnage SP, émis par la source laser SPS **202,** est portée par une fibre optique PMF **204** vers un duplicateur SPD-PX-TS **205,** qui est analogue au duplicateur SPD-PX-TS **111** illustré sur la figure 2, suivi d'un coupleur **206** qui divise le signal pulsé d'échantillonnage SP en deux répliques. Une première réplique du signal pulsé SP, issue du coupleur **206,** est conduite par une fibre optique PMF **207** vers un dispositif PM-TSM-S **209,** analogue au dispositif PM-TSM-S **114** illustré sur la figure 2. Cette première réplique est alors divisée en deux nouvelles répliques. Les deux nouvelles répliques, issues du dispositif PM-TSM-S **209,** sont conduites par les fibres optiques PMF **211** et **212** vers les coupleurs **213** et **214** respectivement jusqu'au dispositif BD-ADC **215,** analogue au dispositif BD-ADC **117** illustré sur la figure 2. On recueille, à la sortie **216** du dispositif BD-ADC **215** l'information recherchée sous la forme d'un signal numérique et complexe portant sur l'amplitude et la phase du signal optique OS à analyser.

Une seconde réplique du signal pulsé SP, issue du coupleur **206,** est conduite par une fibre optique PMF **208** vers un dispositif PM-TSM-S **210,** analogue au dispositif PM-TSM-S **209.** Les deux nouvelles répliques, issues du dispositif PM-TSM-S **210,** sont ensuite conduites par les fibres optiques PMF **217** et **218** vers les coupleurs **219** et **220** respectivement jusqu'au dispositif BD-ADC **221,** analogue au dispositif BD-ADC **215.** On recueille, à la sortie **222** du dispositif BD-ADC **221** l'information recherchée sous la forme d'un signal numérique et complexe portant sur l'amplitude et la phase du signal optique OS à analyser.

De son côté, le signal optique OS à analyser arrivant dans le système de visualisation **200** entre dans un séparateur PBS **223** qui sépare le signal optique en deux modes de propagation E1 et E2 arbitraires et orthogonaux correspondant ici à un mode de propagation transverse magnétique TM et un mode de propagation transverse électrique TE.

Le mode de propagation transverse magnétique TM, conduit par une fibre optique PMF **224,** est introduit dans un duplicateur DD-PX-TS **225,** analogue au duplicateur DD-PX-TS **107** illustré sur la figure 2. Le duplicateur DD-PX-TS **225** divise le signal en deux répliques, croise la polarisation et introduit un décalage temporel entre les deux répliques, qui sont ensuite combinées puis divisées à nouveau. Une première réplique est envoyée dans la fibre PMF **226** vers l'entrée du dispositif BD-ADC **215** et le coupleur **213,** alors qu'un décalage temporel fixe est imposé à la seconde réplique envoyée dans la fibre PMF **227** en direction de l'entrée du dispositif BD-ADC **215** et du coupleur **214.**

Le mode de propagation transverse électrique TE du signal OS recueilli à la sortie du séparateur PBS **223** est conduit par une fibre optique PMF **228** jusqu'à un duplicateur DD-PX-TS **229,** analogue au duplicateur DD-PX-TS **225.** Le duplicateur DD-PX-TS **229** divise le signal en deux répliques, croise la polarisation et introduit un décalage temporel entre les deux répliques, qui sont ensuite combinées puis divisées à nouveau. Une première réplique est envoyée dans la fibre PMF **230** vers l'entrée du dispositif BD-ADC **221** et le coupleur **219,** alors qu'un décalage temporel fixe est imposé à la seconde réplique envoyée dans la fibre PMF **231** en direction de l'entrée du dispositif BD-ADC **221** et du coupleur **220.**

Enfin on recueille respectivement à la sortie **216** du dispositif BD-ADC **215** et à la sortie **222** du dispositif BD-ADC **221** du système de visualisation par échantillonnage **200,** l'information recherchée sous la forme d'un signal numérique et complexe portant sur l'amplitude et la phase du signal optique OS échantillonné et numérisé. Cette information est ensuite récupérée et affichée, par exemple sous la forme d'un diagramme de constellation.

Il est à noter que le système de visualisation par échantillonnage optique linéaire peut être mis en oeuvre lorsque le milieu optique est constitué d'une liaison par fibres optiques tel qu'il vient d'être décrit, mais pourrait tout aussi bien être mis en oeuvre dans d'autres milieux optiques de propagation, notamment lorsque la propagation optique s'effectue en espace libre.

## Revendications

1. Système de visualisation par échantillonnage optique linéaire d'un signal optique OS comportant au moins un premier sous-système relatif au traitement d'un signal pulsé SP d'échantillonnage et au moins un deuxième sous-système relatif au traitement d'un signal optique OS à échantillonner, le premier et le deuxième sous-systèmes coopérant avec un dispositif pour l'échantillonnage et la détection du signal optique, dans lequel
- le signal pulsé SP et le signal optique OS entrent dans le dispositif pour l'échantillonnage et la détection du signal optique, chacun respectivement sous la forme d'un signal qui comprend une composante de polarisation verticale Vsp, Vtm, Vte et une composante de polarisation horizontale Hsp, Htm, Hte orthogonales entre elles et décalées dans le temps,
- la composante de polarisation verticale Vsp, Vtm, Vte et la composante de polarisation horizontale Hsp, Htm, Hte sont décalées en temps l'une par rapport à l'autre, respectivement pour le signal pulsé SP et pour le signal optique OS, et
- la composante de polarisation verticale Vsp du signal pulsé SP est parallèle à la composante de polarisation verticale Vtm, Vte du signal optique OS, et la composante de polarisation horizontale Hsp du signal pulsé SP est parallèle à la composante de polarisation horizontale Htm, Hte du signal optique OS, permettant de générer des interférences.

2. Système selon la revendication 1, dans lequel le premier sous-système comprend
- une source SPS générant un signal optique pulsé SP,
- au moins un duplicateur SPD-PX-TS qui divise le signal pulsé SP en deux répliques, introduit un croisement de polarisation et un décalage temporel entre les deux répliques, et combine ces deux répliques en un seul signal pulsé SP sortant,
- au moins un diviseur PM-TSM-S qui divise le signal pulsé SP sortant du duplicateur SPD-PX-TS en deux répliques, et ajuste avec précision le décalage temporel entre les deux répliques, pour les composantes de polarisation verticale Vsp et horizontale Hsp du signal pulsé SP indépendamment.

3. Système selon l'une des revendications 1 et 2, dans lequel le décalage temporel introduit entre les deux répliques par le duplicateur SPD-PX-TS est égal à la somme (Tp/2 + Td) de la moitié de la période Tp du signal pulsé SP et du temps-bit Td du signal optique OS.

4. Système selon l'une des revendications 1 à 3, dans lequel le diviseur PM-TSM-S comprend deux cylindres de matériau piezoélectrique autour desquels est enroulée une fibre optique à maintien de polarisation dont la longueur varie sous l'effet de la tension appliquée, permettant un ajustement précis du décalage temporel entre les deux répliques, pour les composantes de polarisation verticale Vsp et horizontale Hsp du signal pulsé SP indépendamment.

5. Système selon l'une des revendications précédentes, dans lequel les deux répliques du signal pulsé SP issues respectivement des deux sorties du diviseur PM-TSM-S sont déphasés d'une quadrature (π/2).

6. Système selon l'une des revendications précédentes, dans lequel le deuxième sous-système comprend
- un séparateur PBS, qui reçoit un signal optique OS à visualiser et qui sépare le signal optique OS entrant en deux modes de propagation E1 et E2 linéaires et orthogonaux entre eux, et
- au moins un duplicateur DD-PX-TS qui divise le signal optique OS en deux répliques, introduit un croisement de polarisation et un décalage temporel entre les deux répliques, et combine ces deux répliques en un seul signal optique OS.

7. Système selon la revendication 6, dans lequel le décalage temporel TS fixe introduit entre les deux répliques par le duplicateur DD-PX-TS est égal à la moitié de la période Tp du signal pulsé SP.

8. Système selon l'une des revendications précédentes, dans lequel le dispositif pour l'échantillonnage et la détection du signal optique OS comprend
- des photodétecteurs équilibrés,
- des lignes à retard temporel fixe FDL,
- des comparateurs des signaux électriques émis par les photodétecteurs équilibrés, et
- un convertisseur analogique-numérique à deux entrées.

9. Système selon l'une des revendications précédentes, dans lequel les liaisons sont réalisées au moyen de fibres optiques à maintien de polarisation.

10. Système selon l'une des revendications précédentes, comportant en outre des coupleurs à maintien de polarisation.

11. Procédé de visualisation par échantillonnage optique linéaire d'un signal optique OS complexe mis en oeuvre au moyen du système selon l'une des revendications précédentes, comprenant
d'une part
- on émet un signal pulsé SP,
- on divise le signal pulsé SP en deux répliques en introduisant un croisement de polarisation et un décalage temporel entre les deux répliques,
- on combine les deux répliques en un seul signal résultant comprenant une composante de polarisation verticale Vsp et une composante de polarisation horizontale Hsp orthogonales entre elles et décalées dans le temps,
- on divise le signal pulsé SP résultant en deux répliques, et on règle avec précision le décalage temporel entre elles,
- on introduit les deux répliques du signal pulsé SP dans le dispositif pour l'échantillonnage et la détection du signal optique OS,
et d'autre part
- on sépare un signal optique OS en deux modes de propagation E1 et E2 orthogonaux entre eux,
- on divise un mode de propagation E1, E2 en deux répliques en introduisant un croisement de polarisation et un décalage temporel entre les répliques,
- on combine les deux répliques en un seul signal résultant comprenant une composante de polarisation verticale Vtm, Vte et une composante de polarisation horizontale Htm, Hte orthogonales entre elles et décalées dans le temps,
- on divise le signal optique OS résultant en deux répliques, et on introduit un décalage temporel fixe entre elles,
- on introduit les deux répliques du signal optique OS dans le dispositif pour l'échantillonnage et la détection du signal optique OS.
